# EUROPÄISCHE PATENTSCHRIFT

(11) **EP 2 811 229 B1**
(45) Veröffentlichungstag und Bekanntmachung des Hinweises auf die Patenterteilung: **28.03.2018**
(21) Anmeldenummer: 14170722.4
(22) Anmeldetag: 02.06.2014
(51) Int. Cl.: F23G 7/06

(54) **Transportable Anlage zur Verbrennung von unerwünschten Gasen**
Transportable installation for burning unwanted gases
Installation transportable destinée à la combustion de gaz indésirables

(30) Priorität: 04.06.2013 DE 102013105758
(43) Veröffentlichungstag der Anmeldung: 10.12.2014
(73) Patentinhaber: Endegs GmbH, 85104 Pförring (DE)
(72) Erfinder: Sievers, Béatrice, 85104 Pförring (DE)
(74) Vertreter: Baudler, Ron

(56) Entgegenhaltungen:
- CA-A1- 2 285 155
- DE-A1-102008 041 703
- US-A- 5 971 744
- US-A1- 2002 044 895
- US-A1- 2007 231 759
- US-B1- 6 352 040

## Beschreibung

Die vorliegende Erfindung betrifft eine transportable Anlage zur Verbrennung von unerwünschten Gasen, beispielsweise in Form von Kohlenwasserstoffen oder Ammoniak, mit wenigstens einem Einlass, der mit einer Rohr- oder Schlauchleitung verbindbar ist, und über den der Anlage das zu verbrennende Gas zuführbar ist, mit einer Brennereinheit zur Verbrennung der unerwünschten Gase, mit einem mit der Brennereinheit in Verbindung stehenden Abgasrohr, das alternativ in eine Betriebsstellung oder eine Transportstellung verbringbar, beispielsweise verschwenkbar, ist, mit einem Strömungskanal (z. B. einer Gasleitung), mit dessen Hilfe der Einlass mit der Brennereinheit strömungstechnisch verbunden ist, mit einem dem Strömungskanal zugeordneten Ventilator, mit dessen Hilfe das zu verbrennende Gas vom Einlass über den Strömungskanal zur Brennereinheit förderbar ist, mit einem Stromgenerator zur Erzeugung der für den Betrieb der Anlage notwendigen elektrischen Energie, mit einem (eventuell als Teil des Stromerzeugers ausgebildeten) Treibstofftank zur Lagerung des für den Betrieb des Stromgenerators notwendigen Treibstoffs, mit einer Steuer- und/oder Regeleinheit zur Steuerung und/oder Regelung der Anlage, und mit einer Trägerplattform, auf der die genannten Bestandteile der Anlage befestigt sind, so dass die Anlage in Form einer einzigen Einheit transportierbar ist.

Gattungsgemäße Anlagen sind im Stand der Technik bekannt und kommen bei der Entgasung von Einrichtungen zum Einsatz, die der Lagerung und/oder dem Transport von Flüssigkeiten oder Gasen dienen. Zu derartigen Einrichtungen zählen beispielsweise Flüssigkeits- oder Gastanks auf diversen Industrieanlagen (z. B. Raffinerien), Tankstellen, Schiffen oder Pipelines. Die genannten Einrichtungen müssen von Zeit zu Zeit entleert werden, wobei die nach der Entleerung in der Einrichtung verbleibenden Gase oftmals giftig oder leicht entflammbar bzw. explosiv sind und nicht in die Umwelt entlassen werden können. Es hat sich daher bewährt, die entsprechenden Gase nach der Entleerung der Einrichtung abzusaugen und kontrolliert zu verbrennen. Derartige Anlagen sind beispielsweise aus den Schriften US2002/0044895 und US6352040 bekannt. Nachteilig am bekannten Stand der Technik ist die Tatsache, dass die entsprechenden Anlagen zur Entgasung der genannten Einrichtungen vor Ort mit einem Stützgastank verbunden werden müssen, in dem ein für die Verbrennung der unerwünschten Gase notwendiges Stützgas (beispielsweise Propan) gespeichert ist. Nach der Verbindung der Anlage mit dem Stützgas muss die Anlage erneut von der zuständigen Instanz (z. B. dem TÜV) abgenommen werden, so dass zusätzliche Kosten entstehen.

Aufgabe der vorliegenden Erfindung ist es daher, eine Anlage der oben genannten Art vorzuschlagen, die völlig autark betrieben werden kann, so dass die Verbindung mit einem Stützgastank vor Ort entfallen kann, wobei die Anlage dennoch den einschlägigen Bestimmungen (z. B. ATEX) entsprechen. Die Aufgabe wird gelöst durch eine Anlage mit den Merkmalen des Patentanspruchs 1.

Erfindungsgemäß zeichnet sich die Anlage dadurch aus, dass sie zusätzlich zu den im Oberbegriff von Anspruch 1 genannten Bestandteilen einen ebenfalls mit der Trägerplattform verbundenen Stützgastank für ein, die Verbrennung der unerwünschten Gase in der Brennereinheit unterstützendes, Stützgas besitzt. Der Stützgastank ist, beispielsweise über eine oder mehrere stationäre Gasleitung(en), strömungstechnisch mit der Brennereinheit verbunden und besitzt ein Sicherheitsventil, über den das Stützgas bei Auftreten eines ungewollten Überdrucks aus dem Stützgastank austreten kann (wobei es sich bei dem Stützgastank um einen einzelnen Tank oder eine Stützgasflasche oder auch um mehrere miteinander gekoppelte Tankeinheiten, beispielsweise in Form von Stützgasflaschen, handeln kann). Um in diesem Fall (oder einer sonstigen Fehlfunktion oder Beschädigung des Stützgastanks oder des Sicherheitsventils) zu verhindern, dass das austretende Stützgas, das in der Regel schwerer ist als Luft, auf direktem Wege in den Bereich der Brennereinheit oder des Stromgenerators strömen kann, ist ferner vorgesehen, dass sich zwischen dem Stützgastank einerseits und dem Stromgenerator und der Brennereinheit andererseits eine Gasbarriere erstreckt. Mit anderen Worten werden der Stützgastank und die im Betrieb der Anlage teilweise heißen Oberflächen der Brennereinheit und des Stromgenerators durch die Gasbarriere räumlich separiert, so dass der ohne die Gasbarriere vorhandenen Brand- oder Explosionsgefahr auf einfache Weise begegnet werden kann. Hierdurch ist es schließlich möglich, die gesamte Anlage von der zuständigen Instanz, wie beispielsweise dem TÜV, einmalig abnehmen zu lassen und vor Ort ohne eine weitere Abnahme bzw. Aufstellungsprüfung betreiben zu können. Bei der Gasbarriere handelt es sich um eine schräg oder vertikal von der Trägerplattform nach oben ragende Wandung handeln, die einem potentiellen Stützgasfluss vom Stützgastank zur Brennereinheit oder zum Stromgenerator im Wege steht und diesen somit unterbindet.

Ebenso bringt es Vorteile mit sich, wenn der Stützgastank mit Hilfe der Gasbarriere auch von dem Ventilator räumlich getrennt ist, um zu verhindern, dass ein unbeabsichtigt aus dem Stützgastank bzw. dem Sicherheitsventil austretendes Stützgas auf direktem Wege mit dem Ventilator in Kontakt gelangt. Ist der Ventilator hingegen entsprechend wärmeisoliert bzw. weist dieser keine heißen äußeren Oberflächen auf, die ein Entzünden des Stützgases bewirken könnten, so könnte der Ventilator auch auf der Seite des Stützgastanks platziert werden. Da es jedoch von Vorteil ist, den Ventilator in der Nähe der Brennereinheit zu platzieren, scheint es zweckmäßig, die zuletzt genannten Einheiten auf derselben Seite der Gasbarriere anzuordnen.

Des Weiteren ist es vorteilhaft, wenn sich die Gasbarriere ausgehend von der Trägerplattform zumindest teilweise in vertikaler Richtung nach oben erstreckt. Die Trägerplattform bildet in der Regel eine flächige bzw. zumindest größtenteils ebene Grundfläche für die einzelnen darauf befestigten Anlagenbestandteile. Mit anderen Worten wird durch die Transportplattform ein gasdichter Bodenbereich geschaffen, der mit Hilfe der Gasbarriere in zwei Hauptbereiche unterteilt sein kann. Ein aus dem Stützgastank austretendes Stützgas würde sich in diesem Fall in dem genannten Bodenbereich sammeln und würde schließlich von der Gasbarriere am Weiterfließen in Richtung der Brennereinheit oder des Stromgenerators gehindert.

In diesem Zusammenhang ist es vorteilhaft, wenn die Gasbarriere gasdicht in die Trägerplattform übergeht bzw. gasdicht mit dieser, beispielsweise über ein Dichtmaterial, verbunden ist. In jedem Fall sollte sichergestellt werden, dass zwischen der Trägerplattform und der Gasbarriere kein Gas hindurchtreten kann, das sich im Bodenbereich der Trägerplattform sammelt. Die Gasbarriere kann beispielsweise direkt an der Trägerplattform befestigt, beispielsweise mit dieser verschraubt oder verschweißt, sein. Ebenso kann die Gasbarriere mit Hilfe von einzelnen Stützelementen mit der Trägerplattform verbunden sein. In diesem Fall sollte jedoch durch ein entsprechendes Dichtmaterial sichergestellt sein, dass zwischen den Stützelementen keine Kanäle verbleiben, über die das Gas die Gasbarriere passieren kann.

Vorteilhaft ist es, wenn sich die Gasbarriere über wenigstens 80 %, bevorzugt über wenigstens 90 %, besonders bevorzugt über wenigstens 95 % der Breite der Trägerplattform erstreckt. In diesem Fall ist eine Barriere vorhanden, die zumindest den Großteil der Trägerplattform in Längsrichtung gesehen in zwei Bereiche trennt, wobei in einem ersten Bereich der Stützgastank und in einem zweiten Bereich der Stromgenerator und die Brennereinheit (vorzugsweise auch der Ventilator) platziert sind. Ebenso ist es von Vorteil, wenn die Gasbarriere wenigstens eine Breite aufweist, die der Breite des Stützgastanks entspricht und wenn die Gasbarriere in Längsrichtung der Anlage gesehen mit dem Gastank fluchtend ausgebildet ist, um den unerwünschten Stützgasfluss bis in den Bereich der Stromgenerators bzw. der Brennereinheit besonders effizient unterbinden zu können.

Vorteile bringt es zudem mit sich, wenn sich die Gasbarriere in vertikaler Richtung zumindest bis auf eine Höhe erstreckt, die in etwa der Höhe des Sicherheitsventils des Stützgastanks entspricht (wobei unter dem Begriff "Höhe" der vertikale Abstand der genannten Elemente zu einer Horizontalen zu verstehen ist, wenn die Anlage auf einer ebenen und horizontalen Fläche abgestellt ist). Die Gasbarriere weist in diesem Fall eine Höhe auf, die es dem aus dem Sicherheitsventil ausströmenden Stützgas unmöglich macht, bis in den kritischen Bereich um die Brennereinheit vorzudringen. Selbstverständlich kann sich die Gasbarriere auch bis zu einem Dachabschnitt der Anlage erstrecken.

Vorteilhaft ist es zudem, wenn die Gasbarriere in einer Höhe (zur Definition siehe vorheriger Absatz) endet, die maximal 100 cm, bevorzugt maximal 50 cm, besonders bevorzugt maximal 30 cm, unterhalb der Höhe des Sicherheitsventils des Stützgastanks liegt. Mit anderen Worten ist es abhängig vom Abstand zwischen dem Stützgastank einerseits und dem Stromgenerator und der Brennereinheit andererseits auch denkbar, dass die Gasbarriere nicht ganz bis auf die Höhe des Sicherheitsventils reicht. Da das Stützgas nämlich in der Regel schwerer als Luft ist, wird es sofort nach dem Austritt aus dem Stützgastank zu Boden sinken, so dass auch eine Gasbarriere ausreichend sein kann, die eine geringere Höhe aufweist als das Sicherheitsventil.

Vorteile bringt es zudem mit sich, wenn die Gasbarriere durch einen mit der Trägerplattform verbundenen Container gebildet ist. Der Container kann beispielsweise als Lagerort für Ersatzteile, Werkzeuge oder sonstige für den Betrieb der Anlage notwendigen Einzelteile dienen. Vorzugsweise weist der Container eine Breite (d. h. Erstreckung senkrecht zur Längserstreckung der Anlage) auf, die annähernd der Breite der Transportplattform entspricht, um diese bzw. die Anlage in zwei Abschnitte unterteilen zu können (d. h. in einen Abschnitt, in dem sich der Stützgastank befindet und einen Abschnitt, in dem sich die Brennereinheit, der Stromgenerator und eventuell auch der Ventilator befindet). Bei dem Container kann es sich um einen Standardcontainer oder auch einen eigens angefertigten Spezialcontainer handeln, wobei der Container beispielsweise mit der Trägerplattform verschraubt und gegenüber dieser abgedichtet sein kann.

Auch ist es äußert vorteilhaft, wenn die Gasbarriere durch einen Aufenthaltsraum für einen oder mehrere Bediener der Anlage gebildet ist. Hierdurch kann die Gasbarriere neben der Funktion, einen Gasfluss in den kritischen Bereich der Anlage zu verhindern, zusätzlich genutzt werden. Beispielsweise ist es denkbar, innerhalb des Aufenthaltsraums die Steuer- und/oder Regeleinheit der Anlage bzw. entsprechende Ein- und Ausgabeelemente (Computer, Displays, etc.) zu platzieren, so dass die für den Betrieb der Anlage relevanten Parameter von dem Aufenthaltsraums aus geändert und überwacht werden können.

Insbesondere bringt es Vorteile mit sich, wenn der Aufenthaltsraum durch einen Container gemäß obiger Beschreibung gebildet wird. Entsprechende Container sind auf dem Markt bekannt und können ohne größere Änderungen mit der Trägerplattform der Anlage verbunden werden.

Des Weiteren ist es vorteilhaft, wenn die Brennereinheit im Bereich einer ersten Stirnseite der Trägerplattform und der Stützgastank im Bereich einer zweiten Stirnseite der Trägerplattform platziert sind, wobei der Abstand zwischen Stützgastank und Brennereinheit wenigstens 6 m, bevorzugt wenigstens 8 m, besonders bevorzugt wenigstens 9 m, betragen sollte. Somit kann nahezu ausgeschlossen werden, dass versehentlich bzw. ungewollt aus dem Stützgastank austretendes Stützgas über seitlich vorhandene Öffnungen um die Gasbarriere herum bis in den Bereich der Brennereinheit gelangen kann.

Ebenso ist es vorteilhaft, wenn zwischen dem Stützgastank und der Brennereinheit ein Verdampfer (vorzugsweise in Verbindung mit einem Druckreduzierer) für das Stützgas platziert ist, mit dessen Hilfe das Stützgas vor der Zufuhr in die Brennereinheit von einem flüssigen in einen gasförmigen Aggregatszustand überführbar ist. In diesem Fall kann ein flüssiges Stützgas zum Einsatz kommen, so dass die Lagerkapazität des Stützgastanks erheblich vergrößert werden kann. Der Verdampfer sollte zudem ebenfalls mit Hilfe der Gasbarriere räumlich von dem Stromgenerator, der Brennereinheit und vorzugsweise auch dem Ventilator getrennt sein, so dass auch eine Fehlfunktion des Verdampfers nicht zu einem Brand oder gar einer Explosion führen kann.

Besondere Vorteile bringt es mit sich, wenn die Anlage ein ebenfalls mit der Trägerplattform verbundenes Rohr- und/oder Schlauchlager besitzt zur Aufnahme einer Vielzahl von Rohr- und/oder Schlauchstücken. Auf diese Weise ist es möglich, die für die Verbindung der Anlage mit dem zu entgasenden Objekt notwendigen Rohr- und/oder Schlauchstücke stets mit der Anlage mitzuführen. Das Rohr- und/oder Schlauchlager kann über eine Vielzahl von Rohren verfügen, in die die entsprechenden Rohr- und/oder Schlauchstücke gesteckt und bei Bedarf einzeln entnommen werden können.

Vorteile bringt es zudem mit sich, wenn das Rohr- und/oder Schlauchlager zwischen dem Stützgastank und der Gasbarriere platziert ist, da es in diesem Fall bewirkt, dass der Stützgastank besonders weit von den Elementen der Anlage getrennt ist, die durch die Gasbarriere von dem Stützgastank (bzw. dem Vergaser) getrennt werden sollen. In diesem Zusammenhang wäre es schließlich auch denkbar, auf eine separate Gasbarriere zu verzichten und vielmehr das Rohr- und/oder Schlauchlager entsprechend in Längsrichtung der Anlage gasdicht auszubilden, so dass der unerwünschte Stützgasfluss innerhalb der Anlage durch das Rohr- und/oder Schlauchlager unterbunden würde.

Auch ist es von Vorteil, wenn das zu verbrennende Gas mit Hilfe einer Vielzahl von Düsen in die Brennereinheit eingebracht wird, wobei jeweils ein Teil der Düsen zu einer Gruppe zusammengefasst ist, und wobei jede Gruppe unabhängig von der oder den restlichen Gruppe(n), beispielsweise über ein oder mehrere Ventile, mit dem Einlass strömungstechnisch verbindbar ist. Mit anderen Worten sind jeweils ein Teil der Düsen mit einer separaten Gaszufuhr verbunden, die mit Hilfe des Ventilators mit dem zu verbrennenden unerwünschten Gas beschickbar sind. Je nach Stellung der einzelnen Ventile ist es nun möglich, entweder alle Düsen oder aber nur eine oder ausgewählte Gruppen zu beschicken. Auf dieses Weise ist es schließlich möglich, den Volumenstrom des Gases bei gleichbleibender Strömungsgeschwindkeit zu ändern, so dass der Volumenstrom des Gases auf die Art bzw. Zusammensetzung desselben angepasst werden kann, ohne die für eine saubere Verbrennung ausschlaggebende Strömungsgeschwindigkeit des Gases signifikant ändern zu müssen. Selbstverständlich ist es möglich, die Anzahl der Gruppen bzw. die Anzahl der Düsen pro Gruppe entsprechend dem Einsatzspektrum der Anlage zu wählen.

Ebenso bringt es Vorteile mit sich, wenn das Stützgas mit Hilfe einer Vielzahl von Stützgasdüsen in die Brennereinheit eingebracht wird, wobei jeweils ein Teil der Stützgasdüsen zu einer Gruppe zusammengefasst ist, und wobei jede Gruppe unabhängig von der oder den restlichen Gruppe(n), beispielsweise über ein oder mehrere Ventile, mit dem Stützgastank strömungstechnisch verbindbar ist. Auf diese Weise kann schließlich auch der Volumenstrom des Stützgases angepasst werden, wobei die Strömungsgeschwindigkeit des die einzelnen Stützgasdüsen verlassenden Stützgases in etwa gleich bleiben kann.

Schließlich ist es von Vorteil, wenn die Trägerplattform mit einem Transportmittel, beispielsweise einem LKW oder einem LKW-Anhänger oder -auflieger, in Verbindung steht und betrieben werden kann, ohne zuvor von dem Transportmittel gelöst bzw. entfernt werden zu müssen. Mit anderen Worten ist die Anlage also vorzugsweise derart ausgebildet, dass sie lediglich mit Hilfe des Transportmittels zu der entgasenden Einrichtung verbracht und entsprechend abgestellt werden muss. Dort kann sie ohne einen vorherigen Entladevorgang unmittelbar nach der Verbindung mit der zu entgasenden Einheit in Betrieb genommen werden, dass die Anlage selbst alle zur Verbrennung der unerwünschten Gase nötigen Einrichtungen und Betriebsstoffe umfasst. Nach Beendigung der Entgasung muss die Anlage lediglich von dem zu entgasenden Objekt getrennt werden und kann schließlich zu einem neuen Ort verbracht und dort nach kürzester Zeit wieder in Betrieb genommen werden.

Weitere Vorteile der Erfindung sind in den nachfolgenden Ausführungsbeispielen beschrieben. Es zeigen:
- **Figur 1**: eine schematische Seitenansicht einer erfindungsgemäßen Anlage,
- **Figur 2**: eine perspektivische Ansicht einer weiteren erfindungsgemäßen Anlage, und
- **Figur 3**: eine Draufsicht auf einen Ausschnitt der Brennereinheit einer erfindungsgemäßen Anlage.

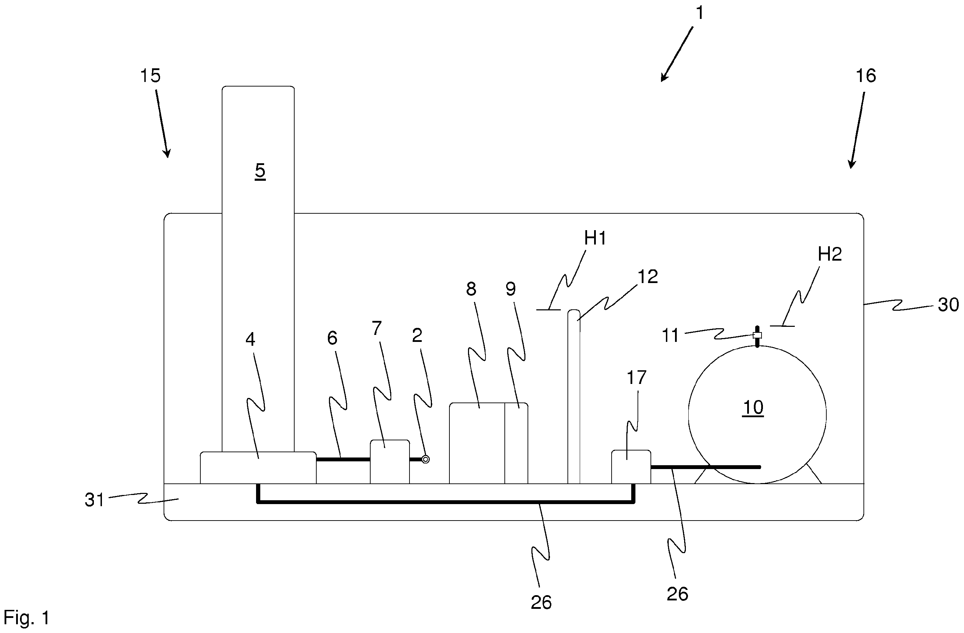

Figur 1 zeigt eine schematische Seitenansicht einer erfindungsgemäß ausgebildeten transportablen Anlage 1 zur Verbrennung von unerwünschten Gasen. Bei den Gasen kann es sich beispielsweise um Kohlenwasserstoffe handeln, die während der Reinigung bzw. Wartung von Treibstofftanks (z. B. auf Raffinerien oder Tankstellen) aus dem entsprechenden Tank abgesaugt werden und anschließend entsorgt werden müssen. Ebenso kann die Anlage 1 der thermischen Verwertung bzw. Entsorgung von entsprechenden Gasen aus der chemischen Industrie, von Gasen, die bei entsprechenden Wartungs- oder Instandhaltungsmaßnahmen aus Pipelines oder Schiffen abgesaugt werden müssen oder von sonstigen, in industriellen Prozessen anfallenden unerwünschten Gasen dienen (wobei zu den Gasen beispielsweise auch Ammoniak zählt).

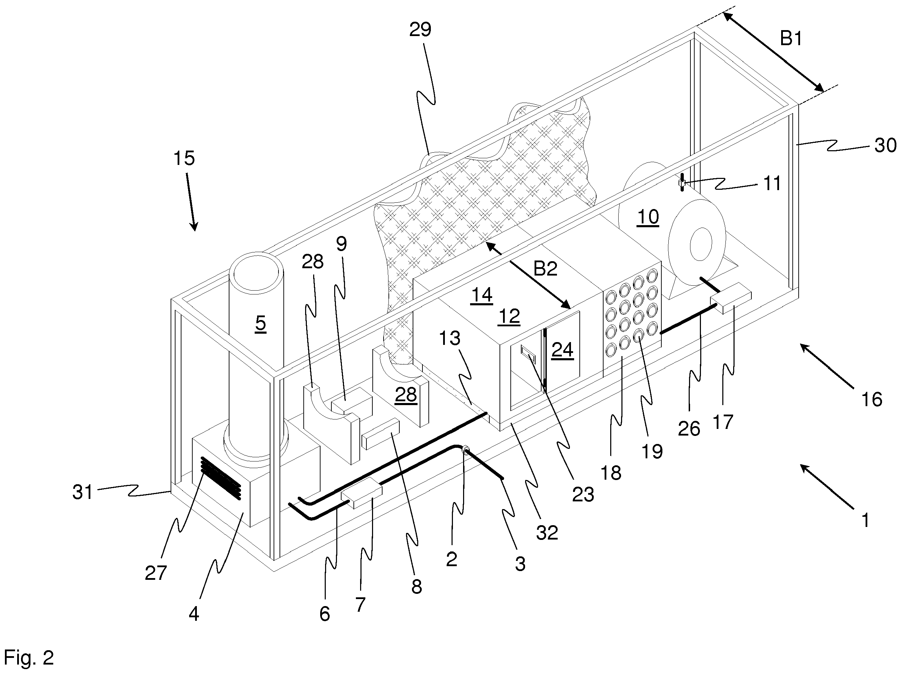

Um die erfindungsgemäße Anlage 1 nun als eine Einheit zu der Stelle transportieren zu können, an der die notwendige Entgasung und Verbrennung der unerwünschten Gase erfolgen soll, besitzt diese zunächst eine in den Figuren 1 und 2 gezeigten Transportplattform. Hierbei kann es sich beispielsweise um eine Stahlplattform oder ein Stahlgestell mit einer Breite B1 von bis zu 4 m und einer Länge (parallel zur Blattebene in Figur 1) von bis zu 25 m handeln. Im Ergebnis besitzt die Anlage 1 also einen stabilen Träger, so dass sie z. B. mit Hilfe eines Krans auf einen LKW bzw. LKW-Anhänger oder ein Schiff verladen und vor Ort wieder entladen werden kann.

Um insbesondere eine autarke Verbrennung der unerwünschten Gase zu ermöglichen, besitzt die Anlage 1 nun eine Vielzahl von für die Verbrennung notwenigen Einrichtungen. Zunächst ist ein Einlass 2 für die unerwünschten Gase vorhanden, der mit einer in Figur 2 angedeuteten Rohr- oder Schlauchleitung 3 verbindbar ist, wobei die Rohr- oder Schlauchleitung 3 wiederum mit dem zu entgasenden Objekt verbunden ist. Der Einlass 2 mündet in einen Strömungskanal 6 (beispielsweise eine Rohrleitung), die mit der eigentlichen Brennereinheit 4 der Anlage 1 in Verbindung steht. Ferner ist zwischen dem Einlass 2 und der Brennereinheit 4 ein Ventilator 7 platziert, der ein Ansaugen des unerwünschten Gases in die Anlage 1 und einen Weitertransport desselben in die Brennereinheit 4 bewirkt.

Um die Anlage 1 bzw. deren stromverbrauchende Bestandteile mit elektrischer Energie versorgen zu können und die Anlage 1 auch unter diesem Gesichtspunkt unabhängig von externen Anschlüssen bzw. Versorgern zu machen, besitzt sie des Weiteren einen Stromgenerator 8 und einen Treibstofftank 9, in dem der für den Betrieb des Stromgenerators 8 notwendige Treibstoff (z. B. Diesel) zwischengelagert werden kann (und der selbstverständlich über eine in den Figuren nicht gezeigte Leitung mit dem Stromgenerator 8 verbunden ist).

Zur Ableitung der bei der Verbrennung der unerwünschten Gase entstehenden Abgase verfügt die Brennereinheit 4 über ein Abgasrohr 5, das zumindest teilweise von der Brennereinheit 4 entfernt werden kann und von einer in Figur 1 gezeigten Betriebsstellung in eine Transportstellung bewegbar (z. B. verschwenkbar) ist. In der Transportstellung kann das Abgasrohr 5 schließlich, beispielsweise auf den in Figur 2 gezeigten Transportstützen 28, abgelegt und fixiert werden. Hierdurch weist die Anlage 1 während des Transports eine geringere Gesamthöhe auf als während des in den Figuren 1 und 2 gezeigten Betriebszustands, bei dem das in der Regel mehrere Meter lange Abgasrohr 5 vorzugsweise senkrecht nach oben weist.

Des Weiteren besitzt die Anlage 1 einen Stützgastank 10 zur Speicherung eines Stützgases (z. B. Propan) bzw. eines Stützgasgemisches. Der Stützgastank 10 steht über entsprechende Verbindungsleitungen 26 mit einem Verdampfer 17 (Druckreduzierer) und letztendlich mit der Brennereinheit 4 in Verbindung und kann dem Brennraum der Brenneinheit ebenso wie das unerwünschte Gas zugeführt werden. Soll nun ein über den Einlass 2 eingesaugtes Gas in der Brennereinheit 4 verbrannt werden, das alleine nicht oder nur schwer brennbar ist, so wird ein nicht gezeigtes Ventil (das sich im Bereich der Brennereinheit 4, des Stützgastanks 10, des Verdampfers 17 oder der genannten Verbindungsleitungen 26 befinden kann) geöffnet. Hierdurch strömt das in der Regel im Stützgastank 10 flüssig vorliegende Stützgas durch den Verdampfer 17, wird dort verdampft und gelangt schließlich in die Brennereinheit 4. Dort unterstützt es letztendlich die Verbrennung des unerwünschten Gases, um eine möglichst saubere Verbrennung desselben sicherzustellen.

Schließlich ist der Stützgastank 10 (und eventuell auch der Verdampfer 17) mit einem Sicherheitsventil 11 ausgerüstet, der ein Abblasen von Stützgas bewirkt, sobald innerhalb des Stützgastanks 10 (bzw. des Verdampfers 17) ein zu hoher Druck herrscht.

Würde die Anlage 1 nun mit den beschriebenen Einheiten betrieben, so wäre zwar eine autarke Verbrennung unerwünschter Gase möglich. Kommt es jedoch zu dem beschriebenen Abblasen des Stützgases, so bestünde die Gefahr, dass sich das austretende brennbare Stützgas an heißen Oberflächen des Stromgenerators 8, des Ventilators 7 oder der Brennereinheit 4 entzündet, so dass es im schlimmsten Fall zu einer Explosion der gesamten Anlage 1 kommen könnte.

Um dies ausschließen zu können, wird nun erfindungsgemäß vorgeschlagen, dass die Anlage 1 neben den erwähnten Bestandteilen eine Gasbarriere 12 besitzt. Bei der Gasbarriere 12 handelt es sich um einen Einbau, beispielsweise eine vertikal ausgerichtete und gasdichte Trennwand, die eine räumliche Separierung des Stützgastanks 10 und des Verdampfers 17 einerseits und der Brennereinheit 4, des Stromgenerators 8 und des Ventilators 7 andererseits bewirkt. Die Gasbarriere 12 weist hierfür eine Breite B2 auf, die vorzugsweise der Breite B1 der Transportplattform entspricht.

Kommt es nun zu einem Abblasen von Stützgas über eines der genannten Sicherheitsventile 11 oder aber zu einem Stützgasaustritt aus dem Stützgastank 10 bzw. des Verdampfers 17 aufgrund einer Beschädigung oder Fehlfunktion derselben, so verhindert die Gasbarriere 12 sicher, dass das austretende Stützgas, das in der Regel schwerer ist als Luft, bis in den Bereich strömen kann, der sich vom Stützgastank 10 gesehen hinter der Gasbarriere 12 befindet.

Im Ergebnis wird durch die Gasbarriere 12 also sichergestellt, dass es auch bei einer Fehlfunktion der Anlage 1 nicht zu einem Brand oder einer Explosion kommen kann.

Eine weitere Ausführungsform der erfindungsgemäßen Anlage 1 ist in Figur 2 gezeigt (wobei diejenigen Einheiten, die bereits beschrieben wurden, auch im Fall der Figur 2 vorhanden und mit denselben Bezugszeichen versehen sind).

Im Gegensatz zu der in Figur 1 gezeigten Ausführung wird die Gasbarriere 12 nun durch einen zwischen dem Verdampfer 17 und dem Stromgenerator 8 platzierten Container 14 gebildet, der gleichzeitig auch als Aufenthaltsraum für einen Bediener der Anlage 1 dient. Der beispielsweise über eine Tür 24 zugängliche Container 14 kann neben entsprechenden für den Komfort des Bedieners dienenden Bestandteilen auch die für den Betrieb der Anlage 1 notwendige Steuer- und/oder Regeleinheit 23 beherbergen, wobei diese wiederum über eine Anzeige der betriebsrelevanten Parameter bzw. ein Eingabepanel zur Änderung derselben verfügen kann.

In jedem Fall verhindert der Container 14, dass aus dem Stützgastank 10 ungewollt austretendes Stützgas auf direktem Wege in den Bereich der in Figur 2 links vom Container 14 angeordneten Einheiten gelangen kann, um so die notwendige Sicherheit der Anlage 1 sicherzustellen. Hierfür weist auch der Container 14 eine Breite B2 auf, die in etwa bzw. annähernd der Breite B1 der Trägerplattform 31 entsprechen sollte.

Sollte der Container 14 über entsprechende Stützen 32 (z. B. Doppel-T-Träger) mit der Transportplattform verbunden sein, so ist für eine entsprechende bodenseitige Abdichtung zwischen der vorzugsweise flächig und/oder eben ausgebildeten Transportplattform und dem Container 14 zu sorgen, wobei dies beispielsweise mit Hilfe der in Figur 2 angedeuteten Dichtmaterial 13 erfolgen kann.

Neben dem Container 14 kann die Anlage 1 schließlich auch über ein Rohr-und/oder Schlauchlager 18 verfügen, in dem die für die Verbindung der Anlage 1 mit dem zu entgasenden Objekt notwendigen und miteinander verbindbaren Rohr- bzw. Schlauchstücke 19 zwischengelagert werden können (ist kein Container 14 vorgesehen, könnte auch das Rohr- und/oder Schlauchlager 18 als entsprechende Gasbarriere 12 dienen).

Ferner kann es von Vorteil sein, wenn die Anlage 1 über einen Rahmen 30 mit einer entsprechenden Verkleidung 29 verfügt. Die in Figur 2 nur exemplarisch dargestellte Verkleidung 29 (die in Form einer oder mehrerer, vorzugsweise auch im Deckenbereich angeordneter, Planen, Schiebeelemente und/oder Jalousien vorliegen kann) kann während des Transports der Anlage 1 geschlossen werden, so dass deren Inneres vor Witterungseinflüssen geschützt ist. Während des Betriebs der Anlage 1 ist es schließlich von Vorteil, wenn die Verkleidung 29 zumindest teilweise geöffnet wird (oder entsprechende Öffnungen aufweist), um einen seitlichen Austritt von eventuell freiwerdenden Gasen zu ermöglichen. Unabhängig von der Gestaltung der Gasbarriere 12 ist es in diesem Fall vorteilhaft, wenn die Brennereinheit 4 im Bereich einer ersten Stirnseite 15 der Trägerplattform 31 und der Stützgastank 10 im Bereich einer zweiten Stirnseite 16 der Trägerplattform 31 platziert ist, um den Abstand zwischen Brennereinheit 4 und Stützgastank 10 zu maximieren.

Schließlich zeigt Figur 2, dass die Brennereinheit 4 beispielsweise eine separate Luftzufuhr 27 (beispielsweise in Form von mit Hilfe der Steuer- und/oder Regeleinheit 23 bewegbaren Luftklappen) besitzen kann, über die die Menge der in die Brennereinheit 4 einströmenden Luft geregelt werden kann, die für die Verbrennung der unerwünschten Gase in der Regel unerlässlich ist.

Um die Verbrennung besonders gut auf die Menge, Konzentration oder Zusammensetzung des zu verbrennenden unerwünschten Gases anpassen zu können, kann schließlich auch die Zufuhr des unerwünschten Gases und/oder des Stützgases durch eine weitere Weiterbildung der Erfindung angepasst werden.

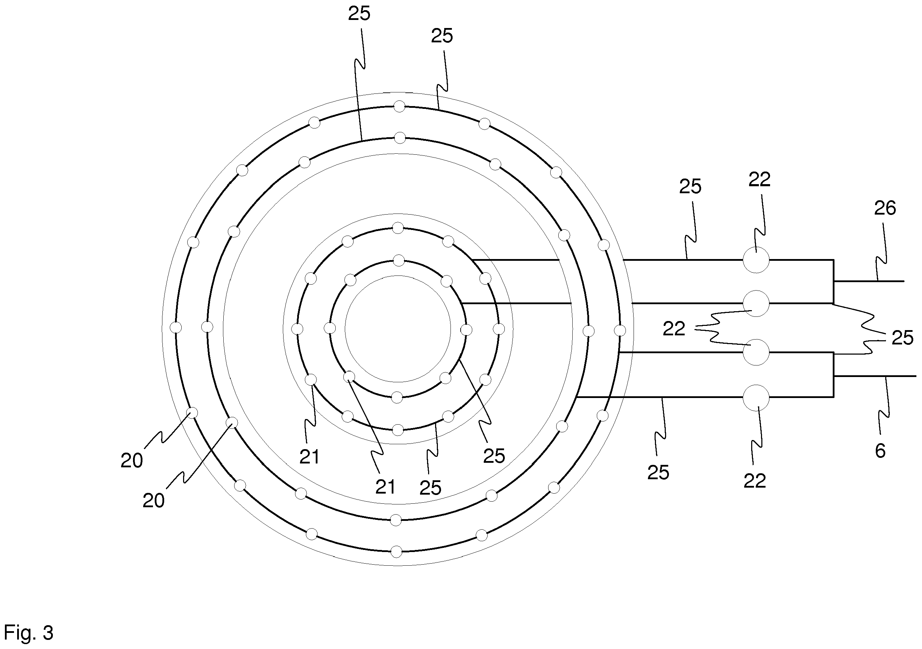

Wie Figur 3 in diesem Zusammenhang zeigt, kann es von Vorteil sein, die Düsen 20, über die das unerwünschte Gas in den Brennraum der Brennereinheit 4 einströmt und/oder die Stützgasdüsen 21, über die die entsprechende Zufuhr des Stützgases erfolgt, in einzelne Gruppen aufzuteilen, die jeweils separat mit dem entsprechenden Gas versorgt werden können. Im Fall der in Figur 3 gezeigten Lösung sind sowohl die Düsen 20 für das unerwünschte Gas als auch die Stützgasdüsen 21 in jeweils zwei konzentrischen Düsenkreisen angeordnet, wobei jeder Düsenkreis mit einer separaten Gasleitung 25 verbunden ist. Die einzelnen Gasleitungen 25 sind wiederum mit der jeweiligen Verbindungsleitung 26 mit dem Stützgastank 10 bzw. dem oben beschriebenen Ventilator 7 verbunden und können mit Hilfe von Ventilen 22 unabhängig voneinander geöffnet oder geschlossen werden. Dies hat schließlich den entscheidenden Vorteil, dass der Volumenstrom des unerwünschten Gases und/oder des Stützgases durch Betätigen der einzelnen Ventile 22 geändert werden kann, ohne dass es zu einer Veränderung der Strömungsgeschwindigkeit der über die Düsen 20 bzw. Stützgasdüsen 21 austretenden Gase kommt. Die Verbrennung kann auf diese Weise immer mit einer optimalen Strömungsgeschwindigkeit der Gase betrieben werden, wobei der Gesamtvolumenstrom derselben angepasst werden kann.

Während die Düsen 20 für das unerwünschte Gas und die Stützgasdüsen 21 in Figur 3 in jeweils zwei Gruppen aufgeteilt sind, ist selbstverständlich auch eine Aufteilung auf mehr als zwei Gruppen möglich. Ebenso kann es von Vorteil sein, nur die Düsen 20 für das unerwünschte Gas oder die Stützgasdüsen 21 entsprechend zu gruppieren oder die Anzahl der Gruppen für beide Düsenarten unterschiedlich zu wählen, wobei auch die Anzahl der Düsen 20, 21 pro Gruppe innerhalb derselben Düsenart (Stützgasdüsen 21 oder Düsen 20 für das unerwünschte Gas) unterschiedlich sein kann.

Die vorliegende Erfindung ist nicht auf das dargestellte und beschriebene Ausführungsbeispiel beschränkt. Abwandlungen im Rahmen der Patentansprüche sind ebenso möglich wie eine Kombination der Merkmale, auch wenn sie in unterschiedlichen Ausführungsbeispielen dargestellt und beschrieben sind.

### Bezugszeichenliste

- 1: transportable Anlage
- 2: Einlass
- 3: Schlauchleitung
- 4: Brennereinheit
- 5: Abgasrohr
- 6: Strömungskanal
- 7: Ventilator
- 8: Stromgenerator
- 9: Treibstofftank
- 10: Stützgastank
- 11: Sicherheitsventil
- 12: Gasbarriere
- 13: Dichtmaterial
- 14: Container
- 15: erste Stirnseite der Trägerplattform
- 16: zweite Stirnseite der Trägerplattform
- 17: Verdampfer
- 18: Rohr- und/oder Schlauchlager
- 19: Schlauchstück
- 20: Düse
- 21: Stützgasdüse
- 22: Ventil
- 23: Steuer- und/oder Regeleinheit
- 24: Tür
- 25: Gasleitung
- 26: Verbindungsleitung
- 27: Luftzufuhr
- 28: Transportstütze
- 29: Verkleidung
- 30: Rahmen
- 31: Trägerplattform
- 32: Stütze

- H1: Höhe der Gasbarriere
- H2: Höhe des Sicherheitsventils
- B1: Breite der Trägerplattform
- B2: Breite der Gasbarriere

## Patentansprüche

1. Transportable Anlage zur Verbrennung von unerwünschten Gasen, beispielsweise in Form von Kohlenwasserstoffen oder Ammoniak,
- mit wenigstens einem Einlass (2), der mit einer Rohr- oder Schlauchleitung (3) verbindbar ist, und über den der Anlage (1) das zu verbrennende Gas zuführbar ist,
- mit einer Brennereinheit (4) zur Verbrennung der unerwünschten Gase,
- mit einem mit der Brennereinheit (4) in Verbindung stehenden Abgasrohr (5), das alternativ in eine Betriebsstellung oder eine Transportstellung verbringbar ist,
- mit einem Strömungskanal (6), mit dessen Hilfe der Einlass (2) mit der Brennereinheit (4) strömungstechnisch verbunden ist,
- mit einem dem Strömungskanal (6) zugeordneten Ventilator (7), mit dessen Hilfe das zu verbrennende Gas vom Einlass (2) über den Strömungskanal (6) zur Brennereinheit (4) förderbar ist,
- mit einem Stromgenerator (8) zur Erzeugung der für den Betrieb der Anlage (1) notwendigen elektrischen Energie,
- mit einem Treibstofftank (9) zur Lagerung des für den Betrieb des Stromgenerators (8) notwendigen Treibstoffs,
- mit einer Steuer- und/oder Regeleinheit (23) zur Steuerung und/oder Regelung der Anlage (1), und
- mit einer Trägerplattform (31), auf der die genannten Bestandteile der Anlage (1) befestigt sind, so dass die Anlage (1) in Form einer einzigen Einheit transportierbar ist, wobei
- die Anlage (1) darüber hinaus einen ebenfalls mit der Trägerplattform (31) verbundenen Stützgastank (10) für ein, die Verbrennung der unerwünschten Gase in der Brennereinheit (4) unterstützendes, Stützgas besitzt,
- wobei der Stützgastank (10) strömungstechnisch mit der Brennereinheit (4) verbunden ist,
- wobei der Stützgastank (10) ein Sicherheitsventil (11) besitzt, und
- wobei sich zwischen dem Stützgastank (10) einerseits und dem Stromgenerator (8) und der Brennereinheit (4) andererseits eine Gasbarriere (12) erstreckt, die verhindert, dass ein unbeabsichtigt aus dem Stützgastank (10) bzw. dem Sicherheitsventil (11) austretendes Stützgas auf direktem Wege mit der Brennereinheit (4) oder dem Stromgenerator (8) in Kontakt gelangt,
**dadurch gekennzeichnet, dass**
es sich bei der Gasbarriere um eine schräg oder vertikal von der Trägerplattform nach oben ragende Wandung handelt, die einem potentiellen Stützgasfluss vom Stützgastank zur Brennereinheit oder zum Stromgenerator im Wege steht und diesen somit unterbindet.

2. Anlage gemäß vorangegangenem Anspruch, **dadurch gekennzeichnet, dass** der Stützgastank (10) mit Hilfe der Gasbarriere (12) darüber hinaus von dem Ventilator (7) räumlich getrennt ist, um zu verhindern, dass ein unbeabsichtigt aus dem Stützgastank (10) bzw. dem Sicherheitsventil (11) austretendes Stützgas auf direktem Wege mit dem Ventilator (7) in Kontakt gelangt.

3. Anlage gemäß einem der vorangegangenen Ansprüche, **dadurch gekennzeichnet, dass** sich die Gasbarriere (12) ausgehend von der Trägerplattform (31) zumindest teilweise in vertikaler Richtung nach oben erstreckt und/oder dass die Gasbarriere (12) gasdicht in die Trägerplattform (31) übergeht bzw. gasdicht mit dieser, beispielsweise über ein Dichtmaterial (13), verbunden ist.

4. Anlage gemäß einem der vorangegangenen Ansprüche, **dadurch gekennzeichnet, dass** sich die Gasbarriere (12) über wenigstens 80 %, bevorzugt über wenigstens 90 %, besonders bevorzugt über wenigstens 95 % der Breite (B1) der Trägerplattform (31) erstreckt.

5. Anlage gemäß einem der vorangegangenen Ansprüche, **dadurch gekennzeichnet, dass** sich die Gasbarriere (12) in vertikaler Richtung zumindest bis auf eine Höhe (H1) erstreckt, die in etwa der Höhe (H2) des Sicherheitsventils (11) des Stützgastanks (10) entspricht.

6. Anlage gemäß einem der vorangegangenen Ansprüche, **dadurch gekennzeichnet, dass** die Gasbarriere (12) in einer Höhe (H1) endet, die maximal 100 cm, bevorzugt maximal 50 cm, besonders bevorzugt maximal 30 cm, unterhalb der Höhe (H2) des Sicherheitsventils (11) des Stützgastanks (10) liegt.

7. Anlage gemäß einem der vorangegangenen Ansprüche, **dadurch gekennzeichnet, dass** die Gasbarriere (12) durch einen mit der Trägerplattform (31) verbundenen Container (14) gebildet ist.

8. Anlage gemäß einem der vorangegangenen Ansprüche, **dadurch gekennzeichnet, dass** die Gasbarriere (12) durch einen Aufenthaltsraum für einen oder mehrere Bediener der Anlage (1) gebildet ist.

9. Anlage gemäß Anspruch 7, **dadurch gekennzeichnet, dass** der Container (14) als Aufenthaltsraum gemäß vorangegangenem Anspruch 8 ausgebildet ist.

10. Anlage gemäß einem der vorangegangenen Ansprüche, **dadurch gekennzeichnet, dass** die Brennereinheit (4) im Bereich einer ersten Stirnseite (15) der Trägerplattform (31) und der Stützgastank (10) im Bereich einer zweiten Stirnseite (16) der Trägerplattform (31) platziert sind, und dass der Abstand zwischen Stützgastank (10) und Brennereinheit (4) wenigstens 6 m, bevorzugt wenigstens 8 m, besonders bevorzugt wenigstens 9 m, beträgt.

11. Anlage gemäß einem der vorangegangenen Ansprüche, **dadurch gekennzeichnet, dass** zwischen dem Stützgastank (10) und der Brennereinheit (4) ein Verdampfer (17) für das Stützgas platziert ist, mit dessen Hilfe das Stützgas vor der Zufuhr in die Brennereinheit (4) von einem flüssigen in einen gasförmigen Aggregatszustand überführbar ist, wobei der Verdampfer (17) ebenfalls mit Hilfe der Gasbarriere (12) räumlich von dem Stromgenerator (8), der Brennereinheit (4) und vorzugsweise auch dem Ventilator (7) getrennt ist.

12. Anlage gemäß einem der vorangegangenen Ansprüche, **dadurch gekennzeichnet, dass** die Anlage (1) ein ebenfalls mit der Trägerplattform (31) verbundenes Rohr- und/oder Schlauchlager (18) besitzt zur Aufnahme einer Vielzahl von Rohr- und/oder Schlauchstücken (19), wobei das Rohr- und/oder Schlauchlager (18) vorzugsweise zwischen dem Stützgastank (10) und der Gasbarriere (12) platziert ist.

13. Anlage gemäß einem der vorangegangenen Ansprüche, **dadurch gekennzeichnet, dass** das zu verbrennende Gas mit Hilfe einer Vielzahl von Düsen (20) in die Brennereinheit (4) eingebracht wird, wobei jeweils ein Teil der Düsen (20) zu einer Gruppe zusammengefasst ist, und wobei jede Gruppe unabhängig von der oder den restlichen Gruppe(n), beispielsweise über ein oder mehrere Ventile (22), mit dem Einlass (2) strömungstechnisch verbindbar ist.

14. Anlage gemäß einem der vorangegangenen Ansprüche, **dadurch gekennzeichnet, dass** das Stützgas mit Hilfe einer Vielzahl von Stützgasdüsen (21) in die Brennereinheit (4) eingebracht wird, wobei jeweils ein Teil der Stützgasdüsen (21) zu einer Gruppe zusammengefasst ist, und wobei jede Gruppe unabhängig von der oder den restlichen Gruppe(n), beispielsweise über ein oder mehrere Ventile (22), mit dem Stützgastank (10) strömungstechnisch verbindbar ist.

15. Anlage gemäß einem der vorangegangenen Ansprüche, **dadurch gekennzeichnet, dass** die Trägerplattform mit einem Transportmittel, beispielsweise einem LKW oder einem LKW-Anhänger oder -auflieger, in Verbindung steht und betrieben werden kann, ohne zuvor von dem Transportmittel gelöst bzw. entfernt werden zu müssen.

## Claims

1. A portable system for burning undesired gases, for example in the form of hydrocarbons or ammonia,
- having at least one intake (2) connectable to a pipe or hose (3) and through which the gas to be burned can be fed into the system (1),
- having a burner unit (4) for burning the undesired gases,
having an exhaust pipe (5) connected to the burner unit (4) for alternatively bringing into an operating position or a transport position,
having a flow channel (6) by means of which the inlet (2) is fluidically connected to the burner unit (4),
having a fan (7) associated with the flow channel (6), by means of which the gas to be burned can be transported from the inlet (2) to the burner unit (4) via the flow channel (6),
having an electrical generator (8) for generating the electrical energy required for operating the system (1),
- having a fuel tank (9) for storing the fuel required for operating the electrical generator (8),
- having a controller and/or regulator (23) for controlling and/or regulating the system (1), and
- having a carrier platform (31) on which said components of the system (1) are mounted, so that the system (1) is portable in the form of a single unit,
- the system (1) further comprising a support gas tank (10) connected to the support platform (31) for a support gas supporting the combustion of the undesired gases in the burner unit (4),
- the support gas tank (10) being fluidically connected to the burner unit (4),
- the support gas tank (10) comprising a safety valve (11), and
- a gas barrier (12) extending between the support gas tank (10) at one side and the power generator (8) and the combustion unit (4) at the other side, preventing support gas unintentionally escaping from the support gas tank (10) or the safety valve (11) from making contact along the direct path with the combustion unit (4) or the power generator (8),
**characterized in that**
the gas barrier is a wall protruding upward diagonally or vertically from the support platform and standing in the way of a potential support gas flow from the support gas tank to the combustion unit or to the power generator and thereby prevents said flow.

2. The system according to the preceding claim, **characterized in that** the support gas tank (10) is further spatially separated from the fan (7) by means of the gas barrier (12) in order to prevent support gas unintentionally escaping from the support gas tank (10) or the safety valve (11) from directly making contact with the fan (7).

3. The system according to any one of the preceding claims, **characterized in that** the gas barrier (12) extends at least partially in the upward direction starting from the support platform (31) and/or that the gas barrier (12) transition into the support (31) platform in a gas-tight manner or is connected to the same in a gas-tight manner, for example by means of a sealing material (13).

4. The system according to any one of the preceding claims **characterized in that** the gas barrier (12) extends over at least 80%, preferably over at least 90%, particularly preferably over at least 95% of the width (B1) of the support platform (31).

5. The system according to any one of the preceding claims, **characterized in that** the gas barrier (12) extends in the vertical direction at least to a height (H1) corresponding approximately to the height (H2) of the safety valve (11) of the support gas tank (10).

6. The system according to any one of the preceding claims, **characterized in that** the gas barrier (12) ends at a height (H1) no greater than 100 cm, preferably no greater than 50 cm, particularly preferably no greater than 30 cm below the height (H2) of the safety valve (11) of the support gas tank (10).

7. The system according to any one of the preceding claims, **characterized in that** the gas barrier (12) is formed by a container (14) connected to the support platform (31).

8. The system according to any one of the preceding claims, **characterized in that** the gas barrier (12) is formed by a habitable room for one or more operators of the system (1).

9. The system according to claim 7, **characterized in that** the container (14) is implemented as a habitable space according to the preceding claim 8.

10. The system according to any one of the preceding claims, **characterized in that** the combustion unit (4) is located in the region of a first end face (15) of the support platform (31) and the support gas tank (10) is located in the region of a second end face (16) of the support platform (31), and that the spacing between the support gas tank (10) and the combustion unit (4) is at least 6 m, preferably at least 8 m, particularly preferably at least 9 m.

11. The system according to any one of the preceding claims, **characterized in that** an evaporator (17) for the support gas is located between the support gas tank (10) and the combustion unit (4), by means of which the support gas can be transformed from a liquid into a gaseous aggregate state prior to feeding into the combustion unit (4), wherein the evaporator (17) is also spatially separated from the power generator (8), the combustion unit (4), and preferably also the fan (7) by means of the gas barrier (12).

12. The system according to any one of the preceding claims, **characterized in that** the system (1) comprises a pipe and/or hose rack (18) also connected to the support platform (31) for receiving a plurality of pipe and/or hose pieces (19), wherein the pipe and/or hose rack (18) is preferably located between the support gas tank (10) and the gas barrier (12).

13. The system according to any one of the preceding claims, **characterized in that** the gas to be burned is introduced into the combustion unit (4) by means of a plurality of nozzles (20), wherein a part of the nozzles (20) is collated into a group, and each group can be fluidically connected to the inlet (2) independently of the other group(s), for example by means of one or more valves (22).

14. The system according to any one of the preceding claims, **characterized in that** the support gas is introduced into the combustion unit (4) by means of a plurality of support gas nozzles (21), wherein a part of the support gas nozzles (21) is collated into a group, and each group can be fluidically connected to the support gas tank (10) independently of the other group(s), for example by means of one or more valves (22).

15. The system according to any one of the preceding claims, **characterized in that** the carrier platform is connected to a means of transport, such as a heavy truck, a heavy truck trailer, or a heavy truck semitrailer and can be operated without previously being removed or disconnected from the means of transport.

## Revendications

1. Installation transportable pour brûler des gaz indésirables, par exemple sous forme d'hydrocarbures ou d'ammoniac,
- avec au moins une admission (2), qui peut être reliée à une conduite (3) de tube ou de tuyau, et par laquelle le gaz à brûler peut être acheminé à l'installation (1),
- avec un arrangement de brûleurs (4) pour brûler les gaz indésirables,
- avec un tube d'échappement de gaz (5) en relation avec l'arrangement de brûleurs (4), qui peut être déplacé en alternative dans une position de fonctionnement ou dans une position de transport,
- avec un canal d'écoulement (6), à l'aide duquel l'admission (2) est reliée du point de vue de la technique d'écoulement avec l'arrangement de brûleurs (4),
- avec un ventilateur (7) attribué au canal d'écoulement (6), à l'aide duquel le gaz à brûler peut être acheminé de l'admission (2) via le canal d'écoulement (6) à l'arrangement de brûleurs (4),
- avec un générateur de courant (8) pour générer l'énergie électrique nécessaire pour le fonctionnement de l'installation (1),
- avec un réservoir de carburant (9) pour le stockage du carburant nécessaire pour le fonctionnement du générateur de courant (8),
- avec une unité de commande et/ou de régulation (23) pour la commande et/ou la régulation de l'installation (1), et
- avec une plateforme support (31), sur laquelle sont fixés les composants de l'installation (1) cités, de sorte que l'installation (1) soit transportable sous forme d'unité unique,
dans laquelle
- l'installation (1) comporte en outre un réservoir (10) de gaz support relié à la plateforme support (31) pour un gaz support soutenant la combustion des gaz indésirables dans l'arrangement de brûleurs (4),
- dans laquelle le réservoir (10) de gaz support est relié du point de vue de la technique d'écoulement avec l'arrangement de brûleurs (4),
- dans laquelle le réservoir (10) de gaz support possède une soupape de sécurité (11), et
- dans laquelle une barrière de gaz (12) s'étend entre le réservoir (10) de gaz support d'une part et le générateur de courant (8) et l'arrangement de brûleurs (4) d'autre part, laquelle empêche qu'un gaz support s'échappant accidentellement du réservoir (10) de gaz support ou de la soupape de sécurité (11) entre directement en contact avec l'arrangement de brûleurs (4) ou le générateur de courant (8),
**caractérisée en ce que**
la barrière de gaz est une paroi s'élevant obliquement ou verticalement vers le haut depuis la plateforme support, qui fait barrière à un potentiel écoulement de gaz support depuis le réservoir de gaz support vers l'arrangement de brûleurs ou le générateur de courant et l'empêche de ce fait.

2. Installation selon la revendication précédente, **caractérisée en ce que** le réservoir (10) de gaz support est en outre séparé dans l'espace du ventilateur (7) à l'aide de la barrière de gaz (12) afin d'empêcher qu'un gaz support s'échappant accidentellement du réservoir (10) de gaz support ou de la soupape de sécurité (11) entre en contact direct avec le ventilateur (7).

3. Installation selon l'une des revendications précédentes, **caractérisée en ce que** la barrière de gaz (12) s'étend à partir de la plateforme support (31) au moins partiellement dans le sens vertical vers le haut et/ou que la barrière de gaz (12) se prolonge de manière étanche au gaz dans la plateforme support (31) ou est reliée de manière étanche à cette dernière, par exemple via un matériau d'étanchéité (13).

4. Installation selon l'une des revendications précédentes, **caractérisée en ce que** la barrière de gaz (12) s'étend sur au moins 80 %, de préférence sur au moins 90 %, de manière particulièrement préférée sur au moins 95 % de la largeur (B1) de la plateforme support (31).

5. Installation selon l'une des revendications précédentes, **caractérisée en ce que** la barrière de gaz (12) s'étend dans le sens vertical au moins jusqu'à une hauteur (H1) qui correspond approximativement à la hauteur (H2) de la soupape de sécurité (11) du réservoir (10) de gaz support.

6. Installation selon l'une des revendications précédentes, **caractérisée en ce que** la barrière de gaz (12) se termine à une hauteur (H1) qui situe au maximum à 100 cm, de préférence au maximum à 50 cm, de manière particulièrement préférée au maximum à 30 cm en-deçà de la hauteur (H2) de la soupape de sécurité (11) du réservoir (10) de gaz support.

7. Installation selon l'une des revendications précédentes, **caractérisée en ce que** la barrière de gaz (12) est formée par un conteneur (14) relié avec la plateforme support (31).

8. Installation selon l'une des revendications précédentes, **caractérisée en ce que** la barrière de gaz (12) est formée par un espace de séjour pour un ou plusieurs opérateurs de l'installation (1).

9. Installation selon la revendication 7, **caractérisée en ce que** le conteneur (14) se présente sous la forme d'un espace de séjour selon la revendication précédente 8.

10. Installation selon l'une des revendications précédentes, **caractérisée en ce que** l'arrangement de brûleurs (4) est placé dans la zone d'une première face frontale (15) de la plateforme support (31) et le réservoir (10) de gaz support dans la zone d'une seconde face frontale (16) de la plateforme support (31), et que la distance entre le réservoir (10) de gaz support et l'arrangement de brûleurs (4) est de 6 m au moins, de préférence de 8 m au moins et de manière particulièrement préférée de 9 m au moins.

11. Installation selon l'une des revendications précédentes, caractérisée en ce qu'un évaporateur (17) pour le gaz support est placé entre le réservoir (10) de gaz support et l'arrangement de brûleurs (4), à l'aide duquel le gaz support peut être transformé d'un état d'agrégation liquide à un état d'agrégation gazeux avant l'acheminement dans l'arrangement de brûleurs (4), sachant que l'évaporateur (17), à l'aide de la barrière de gaz (12), est également séparé dans l'espace du générateur de courant (8), de l'arrangement de brûleurs (4) et également, de préférence, du ventilateur (7).

12. Installation selon l'une des revendications précédentes, **caractérisée en ce que** l'installation (1) compote un support (18) de conduite et/ou de tuyau également relié avec la plateforme support (31) pour accueillir une multitude de segments (19) de conduite et/ou de tuyau, sachant que le support (18) de conduite et/ou de tuyau est placé de préférence entre le réservoir (10) de gaz support et la barrière de gaz (12).

13. Installation selon l'une des revendications précédentes, **caractérisée en ce que** le gaz à brûler est injecté dans l'arrangement de brûleurs (4) à l'aide d'une multitude d'injecteurs (20), sachant que, respectivement, une partie des injecteurs (20) est réunie en un groupe, et sachant que chaque groupe, indépendamment du ou des autres groupe(s), peut être relié en technique d'écoulement avec l'admission (2), par exemple via une ou plusieurs soupapes (22).

14. Installation selon l'une des revendications précédentes, **caractérisée en ce que** le gaz support est injecté dans l'arrangement de brûleurs (4) à l'aide d'une multitude d'injecteurs (21) de gaz support, sachant que, respectivement, une partie des injecteurs (21) de gaz support est réunie en un groupe, et sachant que chaque groupe, indépendamment du ou des autres groupe(s), peut être relié en technique d'écoulement avec le réservoir (10) de gaz support, par exemple via une ou plusieurs soupapes (22).

15. Installation selon l'une des revendications précédentes, **caractérisée en ce que** la plateforme support est en relation avec un moyen de transport, par exemple un camion ou une remorque de camion ou une semi-remorque de camion, et peut être exploitée sans devoir être au préalable détachée ou démontée du moyen de transport.
